# EUROPEAN PATENT APPLICATION

(11) **EP 3 790 277 A1**
(43) Date of publication of application: **10.03.2021**
(21) Application number: 19195960.0
(22) Date of filing: 06.09.2019
(51) Int. Cl.: H04N 21/2343, H04N 21/442, H04N 21/845

(54) **MEDIA CONTENT DISTRIBUTION AND PLAYBACK**

(71) Applicant: THEO Technologies, 3001 Leuven (BE)
(72) Inventor: TIELEMANS, Steven, 3000 Leuven (BE); TIELEMANS, Maarten, 3200 Aarschot (BE); SPEELMANS, Pieter-Jan, 3290 Diest (BE); PAULISSEN, Lieven, 3012 Wilsele (BE); OKERMAN, Egon, 3000 Leuven (BE)
(74) Representative: IP HILLS NV

(57) **Abstract**

A client (183) for streaming a video from a remote media service (182, 301), available upon request in at least a first representation (130) having a first group of pictures, GOP, size (190) qualified by a first quality score, and a second representation (131) having a second GOP size (191) larger than the first GOP size (190), and qualified by a second quality score superior to the first quality score wherein the client (183) is configured to perform the following steps monitoring (203) operational metrics of the video during playback (202) of the first representation (130); and when a requirement of the second representation (131) is met requesting the remote media service (182, 301) to receive a stream of the video according to the second representation (131), and switching (206) the playback of the video to the second representation (131) thereby increasing the quality score of the representation.

## Description

### Field of the Invention

The present invention generally relates to the streaming of video from a remote media service over a communication network to a media player, such as a browser application running in a client, such as, for example, a video player running in a browser application.

### Background of the Invention

Nowadays, streaming a video from a remote media service over a communication network to a media player, such as a video player running in a browser application on a client, is widely popular, whereby the video may be delivered on demand or on request of the player. A large portion of the Internet traffic consists of such video streaming to media players running on a PC, a tablet, a smartphone, a set-up box, a TV, etc.

Video streams should exhibit low start-up time to the viewer, i.e. there should be minimal time between the viewer's request for the stream and the actual playback. Nowadays, viewers desire instant response between the moment they activate the playback and the moment the first frame of the video appears on the screen. The same is applicable for seeking through the video, the viewer desires instant playback when selecting a different playback time within the video. Another requirement is that the data footprint of the video should be small such that storage on the origin server and intermediate caching servers is small. Small storage sizes also result in lower start-up times as the transfer times to the client over the bandwidth limited communication medium will be shorter. Moreover, a smaller data footprint also results in lower network communication costs, both for the media provider and for the consumer.

Video streams should further exhibit low latency to the viewer. Latency is the time between when an event is captured by a camera and the moment the captured event is displayed on a screen.

Different protocols and technologies for streaming video have been proposed. A first technology is progressive download which relates to the playback of media files on a client before the download of the media file is completed. A media player on the client that is capable of progressive download relies on meta data located in the header at the beginning of the media file. When the meta data and the first frames of the media have been downloaded and buffered, the media player will start the actual playback thereby considerably reducing start-up time and/or latency. A problem with progressive download is that inherently it does not support live streaming and it doesn't support the switching between qualities and bit rates.

Apart from progressive download, there are dedicated streaming protocols that provide live streaming and switching between qualities. In general, streaming protocols divide media in smaller chunks or segments. A segment or chunk may then be played independently from another segment by providing an independent frame, also referred to as key frame, at the beginning of the segment. Such a key frame can be decoded by the client without any information on the preceding or subsequent frames. Streaming protocols may be implemented on top of specifically designed transport protocols such as The Real-time Streaming Protocol (RTSP), Real-time Transport Protocol (RTP), Real-Time Messaging Protocol (RTMP) and the Real-time Transport Control Protocol (RTCP). However, as these transport protocols have difficulties to traverse firewalls and proxies, new streaming protocols that use the standard HTTP protocol have emerged. These protocols also offer adaptive bitrate streaming allowing the client to switch between different bit rates, resolutions or codec depending on the available resources. To achieve this, versions of the streams, each with a different bit rate, resolution or codec, are made available on the server for the client. Examples of HTTP adaptive bitrate streaming protocols are MPEG-DASH published as ISO/IEC 23009-1:2012, HTTP Dynamic Streaming by Adobe, HTTP Live Streaming (HLS) by Apple and Smooth Streaming, a Microsoft IIS Media Services extension.

In order to allow low start-up time and/or latency streaming with HTTP Adaptive Streaming protocols, operators are reducing the length of their buffers. This is in an environment where Adaptive Bitrate Switching is achieved by providing media information split in different segments. The different segments, which contain Group of Pictures (GOPs) start each with a full picture frame, a key frame, and is followed by incremental dependent frames.

In order to allow for stable playback in case of environment changes such as a reduction in network traffic, a player should be able to switch to another segment before its buffer runs out. When switching to another segment, the player needs to fill its buffer starting with a key frame for that segment in order to make the buffer playable. Therefore, when aiming for low latency and a low buffer, providers currently attempt to make all segments very short.

However, making segments shorter in order to quickly download the start of a GOP after the end of a buffer results in significant overhead as independent frames are bigger than dependent frames. On the other hand, when segments are longer, a player will not be able to switch down to a lower bandwidth in time as it needs to wait for a long time before an independent frame is made available, resulting in a player stall. As a remedy, a player needs to download video data which was played out already, resulting in a large amount of media data to be downloaded, also resulting in a stall.

There is thus a contradiction in terms of providing a proper GOP size, which is a shortcoming. Given this contradiction, there is thus a need to have a right balance between either short GOP sizes to allow for stable playback and long GOP sizes to lower the overhead of the communication network used to stream the video.

### Summary of the Invention

It is an object of the present invention to overcome the above-mentioned contradiction and related drawbacks and to provide a solution for streaming videos in an efficient manner.

This object is achieved, according to a first aspect of the invention, by a client for streaming a video from a remote media service, wherein the video is available from the remote media service to the client upon request in at least:
- a first representation having a first GOP size, and wherein the first representation is qualified by a first quality score; and
- a second representation having a second GOP size larger than the first GOP size, and wherein the second representation is qualified by a second quality score, the second quality score superior to the first quality score;
wherein the client is configured to perform the following steps:
- monitoring operational metrics of the video during playback of the first representation; and when a requirement of the second representation is met:
- requesting the remote media service to receive a stream of the video according to the second representation; and
- switching the playback of the video to the second representation thereby increasing the quality score of the representation that is being played.

In other words, the client is suitable for streaming a video from a remote media service. The video is, for example, streamed by a video player application comprised in a web browser running on the client, such as a PC, tablet, a smartphone, a set-up box, a TV, or any other device configured to play the video. The video is made available to the client by a remote media service. This is, for example, performed via online streaming platforms, such as YouTube, Netflix, Telenet Play, etc.

The video is made available by the remote media service in at least two formats, namely a first representation and a second representation. A first difference between both representations is that the GOP size of the second representation is larger than the GOP size of the first one. A second difference is that the quality of the second representation is superior to that of the first one. To make a comparison between the qualities of the representations, each of the representations is qualified, described or characterized by a quality score. The quality score may, for example, be defined on a scale from zero to ten, wherein ten corresponds to a high quality and zero to a low quality. Another example is that the quality score corresponds to a percentage or any other definition suitable to express a quality of a representation.

The quality score is, for example, based on one or more parameters of the group of an average bitrate, a maximum bitrate, a resolution, a sample rate, a codec and/or a GOP size. For example, when the resolution of the second representation is higher than that one of the first representation, the quality score of the second representation could be higher than that of the first one.

The quality score may also be received from the remote media service which, for example, determines the quality score. This may be executed by the remote media service through a framework such as Video Multimethod Assessment Fusion, VMAF, Peak Signal-to-Noise Ratio, PSNR, or Structural Similarity, SSIM, such that the quality score is automatically determined.

Another possibility is that a quality score is assigned to a representation by an administrator controlling the remote media service. Alternatively, the client may be configured to determine the quality score based on one of the group of an average bitrate, a maximum bitrate, a resolution, a sample rate, a codec and/or a GOP size.

The client is further configured to monitor operational metrics of the video during playback of the first representation. In other words, the video is streamed to the client in the first representation and during playback on the client, it is monitored or surveyed by checking operational metrics of the client. These operational metrics may comprise one of the group of a resolution of a client's screen, an orientation of the client's screen, a type of network the client is connected to, a current client's CPU usage, a priority assigned to an application running the representation in a multitasking environment, a client's battery status, a client's available memory, a client's supported codecs, a client's estimated available bandwidth, a number of frames dropped during playback of a representation, a number of media samples dropped during playback of a representation, an occurrence of errors during decode and playback; and/or an occurrence of a client's player buffer running empty. It should be further appreciated that other operational metrics may also be monitored and that the enumeration of the above metrics is not exhaustive.

Through the monitoring of one or more of these operational metrics two aspects of the video during playback are identified or determined. Firstly, it is determined if the video is represented or play backed in the first representation in a proper way. Secondly, it is also determined if the client is able to play back the video in the second representation. Differently formulated, it is verified or examined if the client may meet or fulfil a requirement to play back the video in the second representation.

The meeting a requirement may, for example, be determined by monitoring one of the group of a resolution of a client's screen, an orientation of the client's screen, a type of network the client is connected to, a current client's CPU usage, a priority assigned to an application running the representation in a multitasking environment, a client's battery status, a client's available memory, a client's supported codecs, a client's estimated available bandwidth, a number of frames dropped during playback of a representation, a number of samples dropped during playback of a representation, an occurrence of errors during decode and playback; and/or an occurrence of a client's player buffer running empty, thereby obtaining monitoring results, and matching the monitoring results with a representation.

Next, when this requirement is met, a request is sent to the remote media service to receive the video according to the second representation. Finally, when the video in the second representation is received, the client switches to the second representation and the streaming continuous in the latter one. As a result, by switching from the first representation having the first quality score to the second representation having the second quality score, the quality score of the video being played is thus increased.

An advantage of switching to the second representation is that it is pursued to play the video in the best or most superior representation available, even when the media player can play the video in the first representation perfectly.

Another advantage is that, since the GOP size of the second representation is larger than that of the first representation, less bandwidth may be used while at the same time the quality is increased. This way, the network through which the video is streamed is less loaded thereby making available bandwidth for other applications. Furthermore, there will be a lower network communication cost.

It may also occur that the bandwidth that becomes available through the switching by using a larger GOP size is reinvested in the video stream such that a higher or superior quality is achieved with a same bandwidth, which is an advantage.

According to an embodiment, the video is further available in a third representation having a third GOP size smaller than the second GOP size, and wherein the third representation is qualified by a third quality score, the third quality score inferior to the second quality score and superior to the first quality score wherein, when the requirement of the second representation is no longer met and a requirement of the third representation is met, the client is further configured to requesting the remote media service to receive a stream of the video according to the third representation, and switching the playback of the video to the third representation thereby maximising the quality score of the representation that is being played and that meets a requirement.

In other words, the client may be further configured to switch to a third representation. This may be the case when through the monitoring of the operational metrics the requirement of the second representation is no longer met. The client will then request the remote media service to receive the stream of the third representation and switches thereto when received. This way, the quality score of the representation being played is maximized by taking into account current capabilities of the client through the operational metrics.

The third representation has GOP sizes smaller than the second representation. Compared to the first representation, the GOP sizes may be either the same, smaller or larger. Further, the quality of the third representation, expressed by a quality score, is inferior to that of the second representation but superior to the first one.

Thus, when the requirement of the second representation is no longer met, for example due to a buffer that is running out, the client may temporarily switch to the third representation. Since the GOP size of the third representation is smaller, the client will receive more quickly an independent frame thereby avoiding a stall. Furthermore, since the quality of the third representation is better than that of the first one, the video will be played that meets the highest possible requirement.

According to an embodiment, the client is further configured to request the remote media service to receive a stream of the video according to the second or third representation, depending on which has a first available independent frame, and switch the playback to the representation having the first available independent frame.

When the video is, for example, played back by the first representation and through the monitoring it is determined to switch to the second representation, as already explained above, the client may decide to temporarily switch to the third representation when it has the first available independent frame. Next, when switched to the third representation, another switch may be made to the second representation. In other words, the client switches from the first to the third representation thereby increasing the quality, and subsequently switches from the third to the second one and again increases the quality. This sequence of switching avoids a stall of the video player while at the same time the quality in gradually increased.

According to an embodiment, the client is further configured to repeat the requesting until the playback is switched to a representation comprising a quality score that is maximized for a requirement.

Preferably, the client repeats the requesting of receiving a representation having the highest quality score and that meets a requirement. This way, the client pursues to play back the video in its best quality available. This may be achieved by an alternation of switching between different representations, whereby a requirement is taken into account and thus also the capabilities of the client.

According to an embodiment, the switching to a requested representation comprises waiting for an independent frame within the requested representation and performing the switching at the independent frame.

In other words, the client may also wait to make the requesting until an independent frame is available. This way, the switching to another representation will be performed more smoothly.

According to an embodiment, the requesting further comprises requesting to receive the stream from the next independent frame onwards of the representations meeting a requirement and switching to a representation that responds firstly to a request, thereby switching to the representation with a first independent frame.

This way, the switching is performed in an efficient manner.

According to a second aspect, the invention relates to remote media service configured to provide a video to a remote client upon request in at least a first representation having a first GOP size, and wherein the first representation is qualified by a first quality score, and a second representation having a second GOP size larger than the first GOP size, and wherein the second representation is qualified by a second quality score, the second quality score superior to the first quality score.

In other words, the remote media service is configured to provide a video to the remote client according to the first aspect of the invention.

Optionally, according to an embodiment, the remote media service is configured to determine a quality score based on one of the group of an average bitrate, a maximum bitrate, a resolution, a GOP size, a sample rate, a quality metric determined by a framework such as VMAF, PSNR, or SSIM.

According to a third aspect, the invention relates to a computer-implemented method for streaming a video to a client according to the first aspect from a remote media service according to the second aspect, wherein the video is available from the remote media service to the client upon request in at least a first representation having a first GOP size and wherein the first representation is qualified by a first quality score, and a second representation having a second GOP size larger than the first GOP size, and wherein the second representation is qualified by a second quality score, the second quality score superior to the first quality score.

According to a fourth aspect, the invention relates to a computer program product comprising computer-executable instructions for causing a client to perform at least the steps according to the first aspect.

According to a fifth aspect, the invention relates to computer program product comprising computer-executable instructions for causing a remote media service according the second aspect to provide a video to a remote client according to the first aspect upon request in at least a first representation having a first GOP size, and wherein the first representation is qualified by a first quality score, and a second representation having a second GOP size larger than the first GOP size, and wherein the second representation is qualified by a second quality score, the second quality score superior to the first quality score.

According to a sixth aspect, the invention relates to a computer readable storage medium comprising the computer program product according to the fourth or the fifth aspect.

### Brief Description of the Drawings

The invention will now further be described with references to the drawings wherein:
Fig. 1 illustrates a server and a client according to an embodiment;
Fig. 2 illustrates steps performed by a client for receiving a representation from a server;
Fig. 3 illustrates a set-up of a remote media service for communication with a server and a client; and
Fig. 4 illustrates a suitable computing system for performing methods according to various embodiments of the invention.

### Detailed Description of Embodiment(s)

The present invention relates to the streaming of a video from a remote media service to a client. A video received by a client is a combination of ordered still pictures or frames that are decoded or decompressed and played one after the other within a video application. To this respect, a client may be any device capable of receiving a digital representation of a video over a communication network and capable of decoding the representation into a sequence of frames that can be displayed on a screen to a user. Examples of devices that are suitable as a client are desktop and laptop computers, smartphones, tablets, setup boxes and TVs. A client may also refer to a video player application running on any of such devices. Streaming a video refers to the concept that the client can request a video from a server and start the playback of the video upon receiving the first frames without having received all the frames of the video. A streaming server is then a server that can provide such streaming of videos upon request of a client to the client over a communication network, for example over the Internet, over a Wide Area Network (WAN) or a Local Area Network (LAN).

Video received from a streaming server is compressed according to a video compression specification or standard such as H.265/MPEG-H HEVC, H.264/MPEG-4 AVC, H.263/MPEG-4 Part 2, H.262/MPEG-2, SMPTE 421M (VC-1), AOMedia Video 1 (AV1) and VP9. According to those standards, the video frames are compressed in size by using spatial image compression and temporal motion compensation. Frames on which only spatial image compression is applied or no compression is applied are referred to as temporal independent frames, key frames, independent frames or I-frames. A key frame is thus a frame that is decodable independently from other frames in the video. Frames to which temporal motion compensation is applied, either in combination with image compression, are referred to as temporal dependent frames or, shortly dependent frames. Dependent frames are thus frames for which information of other frames is needed to decompress them. Dependent frames are sometimes further categorized in P frames and B frames. P frames can use data from previous frames to decode and are thus more compressible than I frames. B frames can use both previous and forward frames to decode and may therefore achieve the highest amount of data compression.

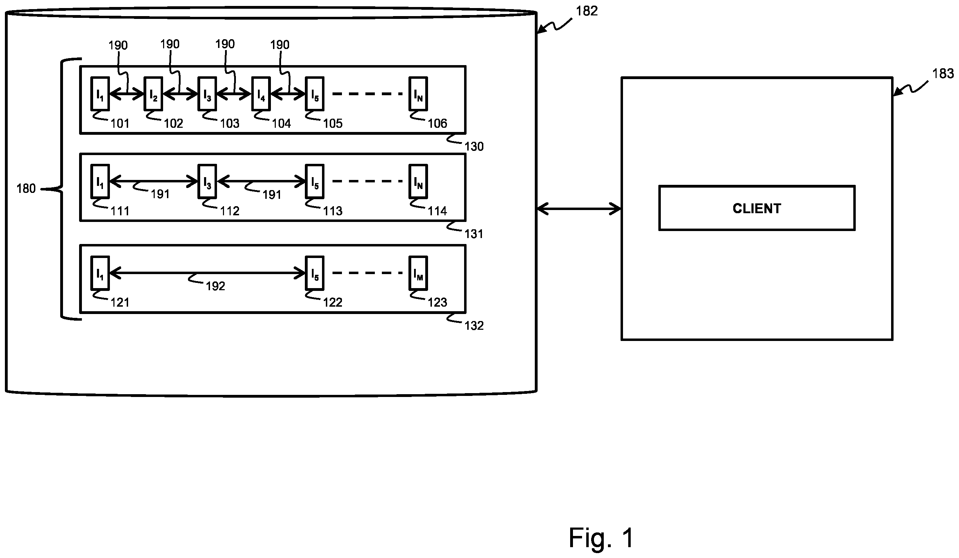

Fig. 1 illustrates a streaming server 182 for providing video streams to a client 183 according to an embodiment of the invention. The server 182 comprises a video 180 which is available through different representations. A first representation 130 has a number of I-frames 101-106 separated from each other with a predefined group of pictures, GOP, size 190. The video 180 is further available in a second representation 131 which comprises less I-frames 111-114 compared to the first representation 130, and thus has a larger GOP size 191 compared to the first representation. The video 180 is further available in a third representation 132 with less I-frames 121-123 compared to the second representation 131 and thus a larger GOP size 192.

The three representations 130-132 are further characterized by a respective quality score. The quality score represents the quality of the respective representation 130-132, for example when played by the client 183 on a screen.

The quality score is, for example, based on one or more parameters of the group of an average bitrate, a maximum bitrate, a resolution, a sample rate, a codec and/or a GOP size. For example, when the resolution of the second representation 131 is higher than that one of the first representation 130, the quality score of the second representation 131 is higher than that of the first one 130.

In this illustrative embodiment, the quality score of the first representation 130 is inferior to that of the second representation 131. Further, the quality score of the third representation 132 is likewise inferior to that of the second representation 131. Further, the quality score of the first representation 130 is inferior to that of the third representation 132.

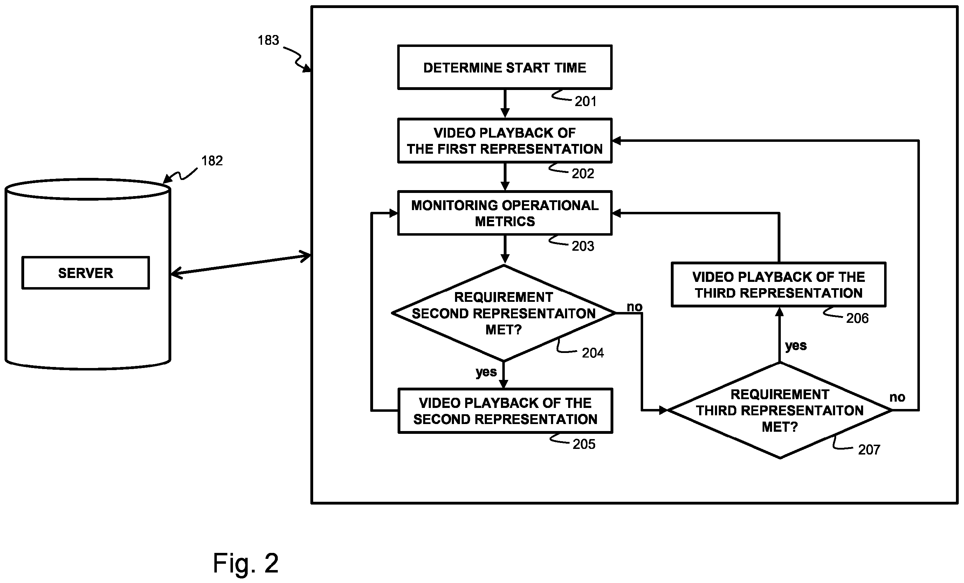

In Fig. 2 steps are illustrated performed by the client 183 for receiving the video 180 from the server 182 and subsequently to display it on a screen thereon. In a first step, the client 183 determines the start time 201. Preferably, the video 180 is played back on the screen from the first I-frame 101 of the first representation 130 onwards.

During playback 202 monitoring 203 is performed by monitoring operational metrics of the video during playback of the first representation 130 by the client 183. These operational metrics may comprise one of the group of a resolution of the client's 183 screen, the orientation of the client's 183 screen, a type of network the client 183 is connected to, the current client's 183 CPU usage, a priority assigned to an application running the representation 130 in a multitasking environment, the client's 183 battery status, the client's 183 available memory, the client's 183 supported codecs, the client's 183 estimated available bandwidth, a number of frames dropped during playback of the representation 130, a number of media samples dropped during playback of the representation 130, an occurrence of errors during decode and playback, and/or an occurrence of the client's 183 player buffer running empty.

Through the monitoring 203 it is determined if a requirement of the second representation 131 is met 204. If so, the client 183 request to the server 182 to receive the second representation 131 and, when received, plays the video when the second representation 131 is received. If the requirement of the second representation 131 continues to be met 204, the device 183 continues to play the video by the second representation 131. In other words, the device 183 doesn't switch to another representation 130, 132 having an inferior quality.

If through the monitoring 203 it is determined that the requirement of the second representation 131 is either not met 204, or no longer met 204 after playback 205 of the second representation 131, the device 183 determines if a requirement of the third representation 132 is met 207. If this requirement is met 207, the device or client 183 requests the server 182 to receive the third representation 132 and continues to play back 206 the video through the third representation 132. During playback 206 of the third representation 132, the monitoring 203 continues. This way, the device 183 aims to playback the video by the second representation 131 which has the highest quality.

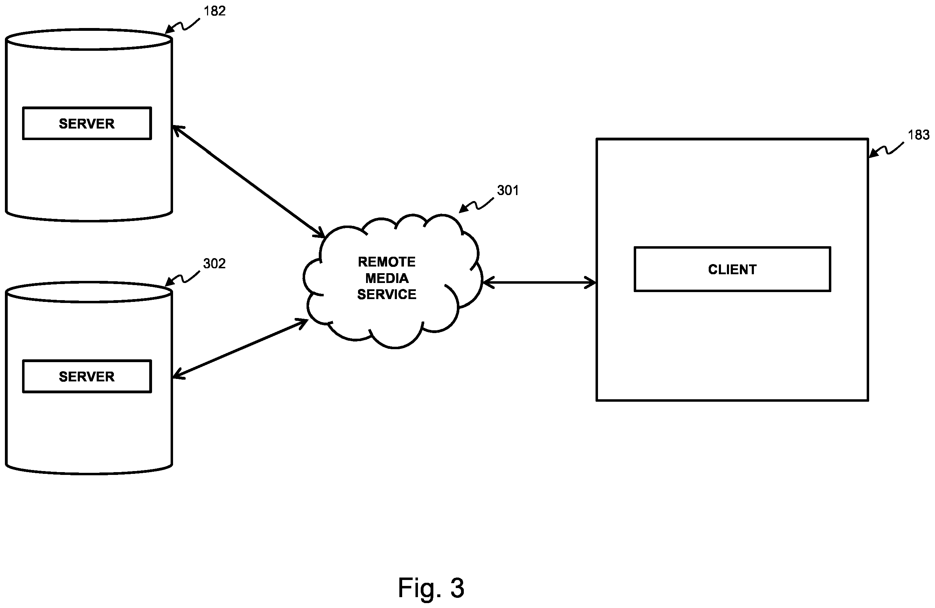

In the illustrative example of Fig. 1 and 2 the server 182 is represented as being located in a single location. However, mostly the client 183 will communicate with a remote media service as illustrated in Fig. 3. The remote media service 301 will then act as an agent between the client 183 and one or more servers 182, 302. The first representation 130 may then, for example, be stored at server 182, while the second 131 and third 132 representation are stored in server 302.

Embodiments of the invention have been described by solely referring to video frames that are exchanged between server and client. It should be understood that the media comprises video frames, but that the media further may data, such as audio data and audio samples of subtitles. Thus, the media may for example comprise one or more audio tracks or subtitles. Other media may also comprise additional frames of other video streams, for example in the case of panoramic video or video with multiple viewing angles.

Each frame may also be encapsulated by the server in a frame packet with an additional header. The header may then comprise further information about the content of the packet. Header information may comprise the following fields:
- Decode Time Stamp: a number which parameterizes the frame in time. It describes the timestamp of this frame on the decoding timeline, which does not necessarily equal the presentation timeline used to present the media. The timestamp may further be expressed in timescale units (see below).
- Presentation Time Stamp: a number which describes the position of the frame on the presentation timeline. The timestamp may further be expressed in timescale units (see below).
- Timescale: the number of time units that pass in one second. This applies to the timestamps and the durations given within the frame. For example, a timescale of 50 would mean that each time unit measures 20 milliseconds. A frame duration of 7 would signify 140 milliseconds.
- Frame Duration: an integer describing the duration of the frame in timescale units.
- Type: a field describing the type of frame, e.g. a video independent frame, a video non-independent frame, an audio independent frame, an audio dependent frame.
- Media Data Size: the actual length of the frame itself.

Independent frames may further comprise the following fields in the header:
- Width: the width of the independent frame and all subsequent dependent frames.
- Height: the height of the independent frame and all subsequent dependent frames.
- Total Duration: the total duration of the track this independent frame belongs to, e.g. expressed in timescale units.
- Decoder configuration and codec information.

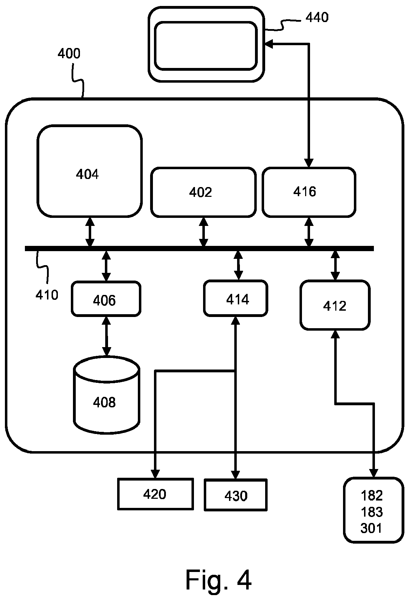

Fig. 4 shows a suitable computing system 400 enabling to implement embodiments of the method for streaming a video from a remote media service 301 according to the invention. Computing system 400 may in general be formed as a suitable general-purpose computer and comprise a bus 410, a processor 402, a local memory 404, one or more optional input interfaces 414, one or more optional output interfaces 416, a communication interface 412, a storage element interface 406, and one or more storage elements 408. Bus 410 may comprise one or more conductors that permit communication among the components of the computing system 400. Processor 402 may include any type of conventional processor or microprocessor that interprets and executes programming instructions. Local memory 404 may include a random-access memory (RAM) or another type of dynamic storage device that stores information and instructions for execution by processor 402 and/or a read only memory (ROM) or another type of static storage device that stores static information and instructions for use by processor 402. Input interface 414 may comprise one or more conventional mechanisms that permit an operator or user to input information to the computing device 400, such as a keyboard 420, a mouse 430, a pen, voice recognition and/or biometric mechanisms, a camera, etc. Output interface 416 may comprise one or more conventional mechanisms that output information to the operator or user, such as a display 440, etc. Communication interface 412 may comprise any transceiver-like mechanism such as for example one or more Ethernet interfaces that enables computing system 400 to communicate with other devices and/or systems, for example with other computing devices 182, 183, 301. The communication interface 412 of computing system 400 may be connected to such another computing system by means of a local area network (LAN) or a wide area network (WAN) such as for example the internet. Storage element interface 406 may comprise a storage interface such as for example a Serial Advanced Technology Attachment (SATA) interface or a Small Computer System Interface (SCSI) for connecting bus 410 to one or more storage elements 408, such as one or more local disks, for example SATA disk drives, and control the reading and writing of data to and/or from these storage elements 408. Although the storage element(s) 408 above is/are described as a local disk, in general any other suitable computer-readable media such as a removable magnetic disk, optical storage media such as a CD or DVD, -ROM disk, solid state drives, flash memory cards, ... could be used. Computing system 400 could thus correspond to the device 183 or the server 182 in the embodiments illustrated by Fig. 1 or Fig. 2.

As used in this application, the term "circuitry" may refer to one or more or all of the following:
(a) hardware-only circuit implementations such as implementations in only analog and/or digital circuitry and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A client (183) for streaming a video from a remote media service (182, 301), wherein the video is available from the remote media service (182, 301) to the client (183) upon request in at least:
- a first representation (130) having a first group of pictures, GOP, size (190), and wherein the first representation (130) is qualified by a first quality score; and
- a second representation (131) having a second GOP size (191) larger than the first GOP size (190), and wherein the second representation is qualified by a second quality score, the second quality score superior to the first quality score;
wherein the client (183) is configured to perform the following steps:
- monitoring (203) operational metrics of the video during playback (202) of the first representation (130); and when a requirement of the second representation (131) is met:
- requesting the remote media service (182, 301) to receive a stream of the video according to the second representation (131); and
- switching (206) the playback of the video to the second representation (131) thereby increasing the quality score of the representation that is being played.

2. The client (183) according to claim 1, wherein the video is further available in:
- a third representation (132) having a third GOP size (190) smaller than the second GOP size (191), and wherein the third representation (132) is qualified by a third quality score, the third quality score inferior to the second quality score and superior to the first quality score; and
wherein, when the requirement of the second representation (131) is no longer met and a requirement of the third representation is met, the client (183) is further configured to:
- requesting the remote media service (182, 301) to receive a stream of the video according to the third representation (132); and
- switching (207) the playback of the video to the third representation (132) thereby maximising the quality score of the representation that is being played and that meets a requirement.

3. The client (183) according to claim 2, wherein the client (183) is further configured to:
- requesting the remote media service (182, 301) to receive a stream of the video according to the second (131) or third (132) representation, depending on which has a first available independent frame (101-106, 111-114); and
- switching (207) the playback to the representation (130, 131) having the first available independent frame (101-106, 111-114).

4. The client (183) according to claim 3, wherein the client is further configured to:
- repeating the requesting until the playback is switched to a representation comprising a quality score that is maximized for a requirement.

5. The client (183) according to one of the preceding claims, wherein the switching (207) to a requested representation (132) comprises:
- waiting for an independent frame (121-123) within the requested representation (132); and
- performing the switching (207) at the independent frame (121-123).

6. The client (183) according to one of the preceding claims, wherein the client is further configured to determine a quality score based on one of the group of:
- an average bitrate, a maximum bitrate, a resolution, a sample rate, a codec and/or a GOP size.

7. The client (183) according to one of the claims 1 to 6, wherein a quality score is received from the remote media service.

8. The client (183) according to one of the preceding claims, wherein meeting a requirement is determined by monitoring one of the group of:
- a resolution of a client's screen;
- an orientation of the client's screen;
- a type of network the client is connected to;
- a current client's CPU usage;
- a priority assigned to an application running the representation in a multitasking environment;
- a client's battery status;
- a client's available memory;
- a client's supported codecs;
- a client's estimated available bandwidth;
- a number of frames dropped during playback of a representation;
- a number of samples dropped during playback of a representation;
- an occurrence of errors during decode and playback; and/or
- an occurrence of a client's player buffer running empty;
thereby obtaining monitoring results, and matching the monitoring results with a representation.

9. The client (183) according to one of the preceding claims, wherein the requesting further comprises requesting to receive the stream from the next independent frame onwards of the representations meeting a requirement and switching to a representation that responds firstly to a request, thereby switching to the representation with a first independent frame.

10. A remote media service (182, 301) configured to provide a video to a remote client (183) upon request in at least:
- a first representation (130) having a first group of pictures, GOP, size (190), and wherein the first representation (130) is qualified by a first quality score; and
- a second representation (131) having a second GOP size (191) larger than the first GOP size (190), and wherein the second representation is qualified by a second quality score, the second quality score superior to the first quality score.

11. The remote media service (182, 301) according to claim 10, further configured to determine a quality score based on one of the group of an average bitrate, a maximum bitrate, a resolution, a GOP size, a sample rate, a quality metric determined by a framework such as Video Multimethod Assessment Fusion, VMAF, Peak Signal-to-Noise Ratio, PSNR, or Structural Similarity, SSIM.

12. A computer-implemented method for streaming a video to a client (182) according to one of the claims 1 to 9 from a remote media service (182, 301) according to one of the claims 10 to 11, wherein the video is available from the remote media service (182, 301) to the client (183) upon request in at least:
- a first representation (130) having a first group of pictures, GOP, size (190), and wherein the first representation (130) is qualified by a first quality score; and
- a second representation (131) having a second GOP size (191) larger than the first GOP size (190), and wherein the second representation is qualified by a second quality score, the second quality score superior to the first quality score;

13. A computer program product comprising computer-executable instructions for causing a client (183) to perform at least the steps according to any of the claims 1 to 9.

14. A computer program product comprising computer-executable instructions for causing a remote media service (182, 301) according to one of the claims 10 to 11 to provide a video to a remote client (183) according to one of the claims 1 to 9 upon request in at least:
- a first representation (130) having a first group of pictures, GOP, size (190), and wherein the first representation (130) is qualified by a first quality score; and
- a second representation (131) having a second GOP size (191) larger than the first GOP size (190), and wherein the second representation is qualified by a second quality score, the second quality score superior to the first quality score.

15. A computer readable storage medium comprising the computer program product according to one of the claims 13 to 14.
